# EUROPEAN PATENT APPLICATION

(11) **EP 4 597 293 A1**
(43) Date of publication of application: **06.08.2025**
(21) Application number: 25154347.6
(22) Date of filing: 28.01.2025
(51) Int. Cl.: G06F 3/12

(54) **JOB SETTING ADJUSTMENT MECHANISM**

(30) Priority: 31.01.2024 US 202418428489
(71) Applicant: Ricoh Company, Ltd., Tokyo 143-8555 (JP)
(72) Inventor: BOULDT, Gerald D., Boulder, CO 80301-9270 (US); DOGARU, Cristina, 300693 Timisoara (RO)
(74) Representative: SSM Sandmair

(57) **Abstract**

A system to is described. The system includes at least one physical memory device to store print workflow manager and one or more processors coupled with the at least one physical memory devices to execute the print workflow manager to receive a print job, receive a job ticket including first attributes, convert the first attributes included in the job ticket to second attributes of a format supported by a printer, determine whether a conflict exists between two or more of the second attributes and perform one or more adjustments to the two or more second attributes based on a priority list upon determining that the conflict exists.

## Description

### FIELD

This invention relates generally to the field of print services. More particularly, the invention relates to processing print jobs.

### BACKGROUND

Entities with substantial printing demands typically implement a high-speed production printer for volume printing (e.g., one hundred pages per minute or more). Production printers may include continuous-forms printers that print on a web of print media (e.g., paper) stored on a large roll. A production printer typically includes a localized print controller that controls the overall operation of the printing system, and a print engine that includes one or more printhead assemblies, where each assembly includes a printhead controller and a printhead (or array of printheads).

### SUMMARY

In one embodiment, a system is disclosed. The system includes at least one physical memory device to store print workflow manager and one or more processors coupled with the at least one physical memory devices to receive a print job, receive a job ticket including first attributes, convert the first attributes included in the job ticket to second attributes of a format supported by a printer, determine whether a conflict exists between two or more of the second attributes and perform one or more adjustments to the two or more second attributes based on a priority list upon determining that the conflict exists.

### BRIEF DESCRIPTION OF THE DRAWINGS

In the following drawings like reference numbers are used to refer to like elements. Although the following figures depict various examples, one or more implementations are not limited to the examples depicted in the figures.
**Figure 1** illustrates one embodiment of a system having a computing device employing a workflow manager.
**Figure 2** illustrates one embodiment of a workflow manager.
**Figure 3** is a flow diagram illustrating one embodiment of a method for performing a print workflow.
**Figure 4** illustrates one embodiment of a printing system.
**Figure 5** illustrates one embodiment of a priority list.
**Figure 6** illustrates one embodiment of conversion and adjustment of job attributes.
**Figure 7** is a flow diagram illustrating one embodiment of a process for performing job settings adjustments.
**Figure 8** illustrates a computing device suitable for implementing embodiments of the present disclosure.

### DETAILED DESCRIPTION

Job Definition Format (JDF) is the communication of choice for managing print production workflows between production printers, inserters, folders, cutters, and printing software. One advantage of JDF is the ability to define plex (e.g., duplex or simplex) settings for printing at the page level. This is important in cutsheet printers because the plex level JDF settings enables construction of Portable Document Format (PDF) files that do not require blank backs to be inserted to ensure the output of a printed PDF is correct, resulting in more expensive printing since blank backs cost customers extra click charges.

JDF job tickets are implemented to indicate desired attributes for print jobs. However, the majority of printers are not capable of directly handling job attributes described in JDF. Thus, the attributes reported in JDF job tickets are often converted to another protocol that is supported by the printer that will print the job. These converted job attributes are subsequently forwarded to the printer. However, the conversion of job attributes to a different format is a notably difficult process because there is not a one-to-one correspondence between protocols for many job attributes. For example, job attributes may map from many-to-few, or may not map at all. As a result, the conversion process is subject to ambiguity that a protocol conversion system attempts to address by inferring the existence (or non-existence) of job attributes.

In some cases, the conversion is performed without error. However, in other cases, the combination of job attributes chosen by a protocol conversion system is not supported by the printer. For example, the combination of job attributes may result in the violation of a constraint listed in a Postscript Printer Description (PPD) format supported by the printer. A constraint violation involves conflicts between job attributes that may occur when one job attribute for a print job has a value that is not permitted based on a value for another job attribute for that print job. Resolving a constraint violation typically requires a substantial amount of time and attention from a print shop operator who may need to investigate the source of the constraint violation and manually adjust the job attributes for the print job until the attributes are compliant. Thus, print shop operators continue to strive for more efficient techniques for ensuring that JDF job attributes are automatically converted into formats suitable for their printers.

According to one embodiment, a mechanism is provided to automatically adjust print job attributes upon the detection of constraint violations. In such an embodiment, a priority list is provided to indicate a priority of job attributes to implement upon detection of a constraint violation. Accordingly, constraint violations are resolved by retaining the highest priority job attribute among the conflicting job attributes and adjusting (e.g., removing and/or altering) low-priority job attributes. As used herein a print job is defined as print data comprising data used by a printer (e.g., print engine 458) to print data to a medium. In embodiments, print data may comprise components (or objects used to print text, images, graphics, bar codes, etc.) and resources (e.g., page segments, overlays, fonts, form definitions, and page definitions). In further embodiments, print data may be comprised of a data file (or print file) that may be transmitted between computer systems.

In the following description, for the purposes of explanation, numerous specific details are set forth in order to provide a thorough understanding of the present invention. It will be apparent, however, to one skilled in the art that the present invention may be practiced without some of these specific details. In other instances, well-known structures and devices are shown in block diagram form to avoid obscuring the underlying principles of the present invention.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Throughout this document, terms like "logic", "component", "module", "engine", "model", "interface", and the like, may be referenced interchangeably and include, by way of example, software, hardware, and/or any combination of software and hardware, such as firmware. Further, any use of a particular brand, word, term, phrase, name, and/or acronym, should not be read to limit embodiments to software or devices that carry that label in products or in literature external to this document.

It is contemplated that any number and type of components may be added to and/or removed to facilitate various embodiments including adding, removing, and/or enhancing certain features. For brevity, clarity, and ease of understanding, many of the standard and/or known components, such as those of a computing device, are not shown or discussed here. It is contemplated that embodiments, as described herein, are not limited to any particular technology, topology, system, architecture, and/or standard and are dynamic enough to adopt and adapt to any future changes.

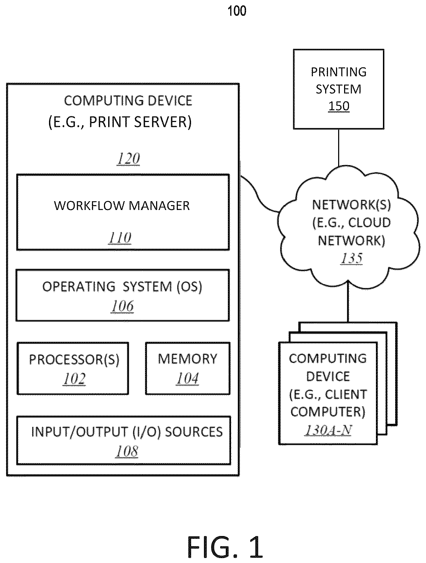

**Figure 1** illustrates a system 100 having a computing device 120 employing a workflow manager 110. In such an embodiment, the computing device 120 includes a print server computer serving as a host machine for employing the workflow manager 110 to manage print workflows received from one or more computing devices 120 for printing at a printing system 150.

In one embodiment, computing device 120 includes an operating system ("OS") 106 serving as an interface between one or more hardware/physical resources of computing device 120, one or more client devices 130 (e.g., 130A-130N) and a printing system 150 via a network 135. In other embodiments, network 135 may be implemented as local area network (LAN). Computing device 120 further includes processor(s) 102, memory 104, input/output ("I/O") sources 108, such as touchscreens, touch panels, touch pads, virtual or regular keyboards, virtual or regular mice, etc.

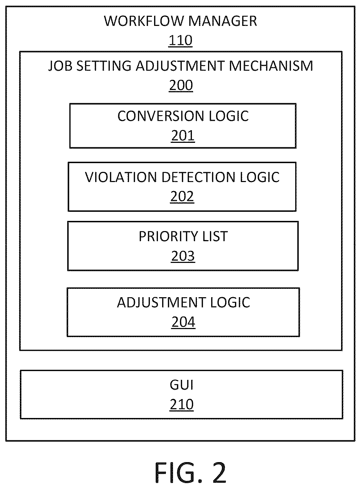

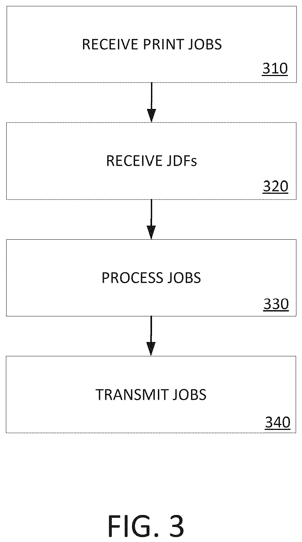

**Figure 2** illustrates one embodiment of workflow manager 110 to perform a print workflow, while Figure **3** is a flow diagram illustrating an embodiment of a process for performing a print workflow. At processing block 310, a print file including one or more print jobs (e.g., in a PDF format) is received. At processing block 320, job tickets are received to describe how the print jobs are to be printed. In one embodiment, the job ticket is a JDF ticket. In other embodiments, job tickets may be generated at workflow manager 110. At processing block 330, the print jobs are processed. In one embodiment, the processing includes the detection of attribute constraint violations and the adjustment of print attributes to resolve the constraint violations, as will be discussed in detail below. At processing block 340, the jobs are transmitted for printing at printing system 150.

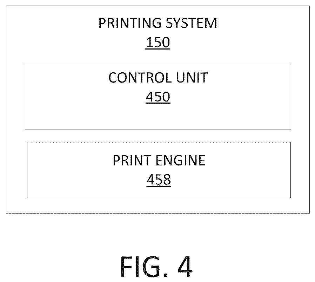

**Figure 4** illustrates one embodiment of such a printing system 150. Printing system 150 includes a control unit 450 and a print engine 458. According to one embodiment, control unit 450 processes and renders objects received in print job data and provides sheet maps for printing to print engine 458. Control unit (e.g., DFE or digital front end) 450 is implemented to process image objects received at control unit 450 by a raster image processor (RIP) to convert an image described in a vector graphics format (e.g., shapes) into a raster image (e.g., pixels) that is to be stored as scan line data in a memory array (not shown) for output to print engine 458.

Referring back to **Figure 2****,** workflow manager 110 includes a job setting adjustment mechanism (or adjustment mechanism) 200 that is implemented in the workflow to adjust print attributes upon detection of one or more constraint violations between attributes. According to one embodiment, adjustment mechanism 200 includes conversion logic 201, violation detection logic 202, a priority list 203 and adjustment logic 204.

As discussed above, workflow manager 110 receives a print job to be printed at printer and a generated job ticket. Conversion logic 201 converts the job ticket to a printer format language. In one embodiment, conversion logic 201 receives the job ticket as a list of job attributes and values and converts attributes included in the job ticket into job attributes of a format supported by printing system 150, such Postscript, Fiery, Kodak KDK, Xerox XRX, etc. In such an embodiment, the converted job attributes in the desired format are returned as attribute-value pairs. In a further embodiment, conversion logic 201 implements a protocol conversion system (e.g., Fiery application program interface (API)) to perform the conversion. Conversion logic 201 may perform job attribute conversions immediately before printing, or as soon as a final job ticket has been received for a print job.

Violation detection logic 202 examines the attribute-value pairs generated by the conversion (or converted attributes) to determine whether the attributes violate one or more constraints. As mentioned above, a constraint violation comprises a combination of job attributes that a printer printing the print job does not support. In one embodiment, violation detection logic 202 retrieves constraints from a PPD associated with a printer prior to print production. However in other embodiments, violation detection logic 202 may query a test printer to retrieve the constraints. In a further embodiment, violation detection logic 202 generates priority list 203 upon receiving the constraints.

In one embodiment, priority list 203 recites a specific set of high-priority job attributes by name. In this embodiment, the high-priority job attributes are considered more important than low-priority job attributes. In such an embodiment, important attributes are attributes that have a higher impact on the output of a print job. Specifically, attributes that control formatting in the converted format of the print job are considered important attributes. For example, in a conflict between a staple attribute and a printing face attribute (e.g., SameOrderFaceDown), it would be more important to keep the staple attribute and remove the SameOrderFaceDown attribute from a usage point of view.

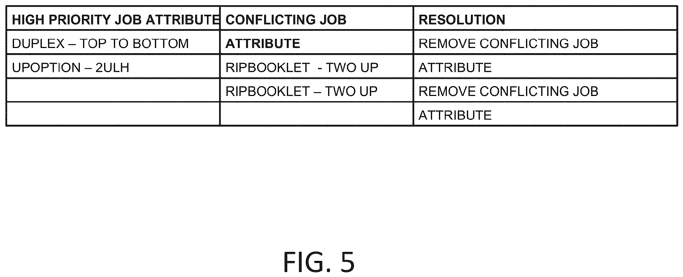

According to one embodiment, priority list 203 includes a list of low-priority job attributes associated with each high-priority job attribute that may cause a constraint violation. Priority list 203 also includes a resolution for each low-priority job attribute upon a determination of a constraint violation. For example, the resolution may include an instruction to adjust the low-priority job attribute. Such an instruction may include removing the low-priority job attribute entirely, altering a value of the low-priority job attribute, or replacing the low-priority job attribute with one or more other job attributes. In embodiments, priority list 203 may be hardcoded, or configured based on input from a user. **Figure 5** illustrates one embodiment of a priority list.

Adjustment logic 204 performs an adjustment indicated in priority list 203 upon detection of a constraint violation at violation detection logic 202. In one embodiment, adjustment logic 204 accesses priority list 203 and performs adjustments based on one or more adjustment rules included in priority list 203. In such an embodiment, each adjustment rule retains the highest priority job attribute among the conflicting job attributes and adjusts (e.g., removes or alters) lower priority job attributes in order to accommodate the highest priority job attribute. In a further embodiment, adjustment logic 204 performs the adjustments included in the resolution instructions explicitly provided in the priority list by iteratively changing the lower-priority job attributes causing the constraint violation and checking to verify whether the constraint violation has been resolved.

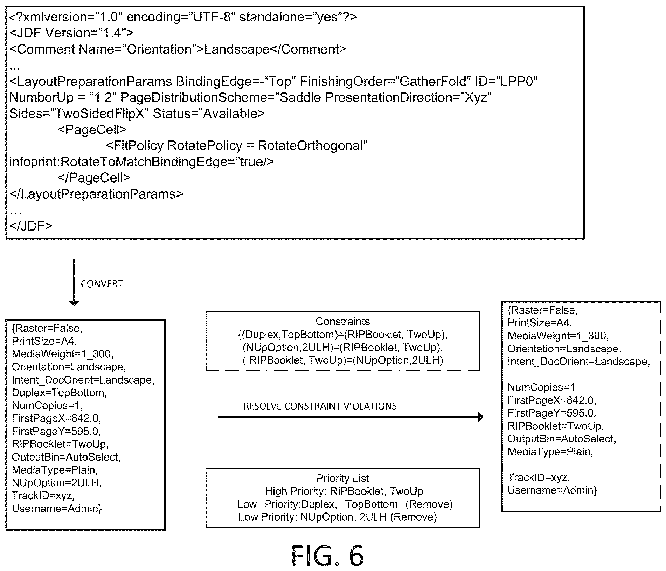

In one embodiment, the print job (e.g., including the converted and adjusted job attributes) is transmitted to the printer for printing after constraint violations have been eliminated. In such an embodiment, the job attributes are transmitted to the printer within a Hypertext Transfer Protocol (HTTP) request as a hash map of key-value pairs. **Figure 6** illustrates one embodiment of adjusted attributes after constraint violations have been resolved.

In some instances, a constraint violation may not be able to be automatically resolved (e.g., because the constraint violation is unexpected, unresolvable, or may have multiple potential resolutions). Thus in embodiments, adjustment mechanism 200 automatically provides a resolution upon a determination that multiple potential solutions exist. Additionally, adjustment mechanism 200 may facilitate the display of a message at a graphical user interface (GUI) 210 requesting input from a print shop operator. For unexpected or unresolvable constraint violations, adjustment mechanism 200 may display also display of a message at GUI 210 for intervention by the print shop operator. Thus valid constraints, (e.g., constraints found in common Postscript Printer Descriptions (PPDs) for printer drivers) may continue to be enforced to prevent printing upon a determination that there are errors in the print job. In further embodiments, GUI 210 may be implemented to enable an operator to view and modify the priority list.

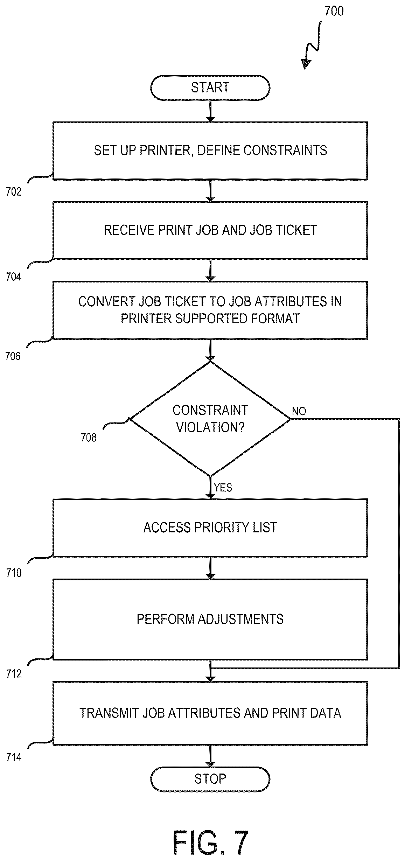

**Figure 7** is a flow diagram illustrating one embodiment of a process 700 for performing job settings adjustments. Process 700 may be performed by processing logic that may comprise hardware (e.g., circuitry, dedicated logic, programmable logic, etc.), software (such as instructions run on a processing device), or a combination thereof. In one embodiment, process 700 may be performed by adjustment mechanism 200. The process 700 is illustrated in linear sequences for brevity and clarity in presentation; however, it is contemplated that any number of them can be performed in parallel, asynchronously, or in different orders. For brevity, clarity, and ease of understanding, many of the details discussed with reference to **Figures 1-6** are not discussed or repeated here.

Process 700 begins at processing block 702, where printer is set up and the constraints are defined prior to print production. At processing block 704, the print job and job ticket are received. At processing block 706, the job ticket is converted to job attributes supported in the printer supported format. At decision block 708, a determination is made as to whether a constraint violation (e.g., a conflict between two or more attributes) has been detected. The priority list is accessed upon a determination that a constraint violation has occurred, processing block 710.

At processing block 712, one or more adjustments are performed. As discussed above the adjustments are performed based on the adjustment rules in the priority list such that a highest-priority job attribute is retained and conflicting low-priority job attributes are adjusted. At processing block 714, the job attributes and print data are transmitted to the printer. Upon a determination at decision block 708 that no constraint violation has been detected, the process proceeds directly to processing block 714 where the converted job attributes and print data are transmitted directly to the printer.

In an exemplary implementation of adjustment mechanism in which a booklet in JDF is to be produced, many job attributes need to be set, including: booklet finishing; imposition (2-up); duplex; and half/saddle fold.

In some embodiments, the booklet settings needed are included in fewer attributes. Thus, the conversion may result in additional job attributes that may cause constraint violations. In this example, constraints reported as "(job attribute, value) are not permitted in combination with (job attribute, value)". These are normally also specified in the opposite direction but with the same values. The specific constraints in this example are {(Duplex,TopBottom)=(RIPBooklet,TwoUp), (NUpOption,2ULH)=(RIPBooklet,TwoUp)}.

In this case, the adjustment mechanism 200 marks the attribute RIPBooklet with a value of TwoUp as a high-priority ("dominant") attribute, and the low-priority ("subordinate") attributes that can be adjusted or removed are Duplex, and NUpOption. This automatically resolves constraint violations that were not caused by invalid user settings, but rather by issues relating to conversion of JDF job attributes to the printer supported format.

For a booklet, the JDF section of the job ticket may include the following:

```
      <LayoutPreparationParams BindingEdge="Top" Class="Parameter" FinishingOrder="GatherFold"
      ID="LPP0" NumberUp="1 2" PageDistributionScheme="Saddle" PresentationDirection="Xyz"
      Sides="TwoSidedFlipX" Status="Available">
           <PageCell>
             <FitPolicy RotatePolicy="RotateOrthogonal
" infoprint:RotateToMatchBindingEdge="true"/>
           </PageCell>
          </LayoutPreparationParams>
```

Also, the printer language job attributes as a result of the conversion of the JDF attributes and values are as follows:
{Raster=False,
PrintSize=A4_RicohR,
Media Weight= 1_300,
Orientation=Landscape,
Intent_DocOrient=Landscape,
Duplex=TopBottom,
NumCopies=1,
FirstPageX=842.0,
FirstPageY=595.0,
RIPBooklet=TwoUp,
OutputBin=AutoSelect,
MediaType=Plain,
NUpOption=2ULH,
TrackID=xyz,
Sort=Sort,
usemame=Admin}
The Fiery constraints are as follows:
{(Duplex, TopBottom)=(RIPBooklet, Two Up), (NUpOption,2ULH)=(RIPBooklet, Two Up),
(RIPBooklet,TwoUp)=(NUpOption,2ULH)}
The result is that the following job attributes can be removed:
Duplex
NUpOption
The list of Fiery job attributes sent to the printer to complete a booklet without constraint violations is:
Intent_DocOrient=Landscape
MediaType=Plain
MediaWeight=1_300
Orientation=Landscape
OutputBin=AutoSelect
PrintSize=A4_RicohR
RIPBooklet=TwoUp
Raster--False
Sort=Sort
FirstPageX=842.0
FirstPageY=595.0
NumCopies=1
TrackID=xyz
usemame=Admin

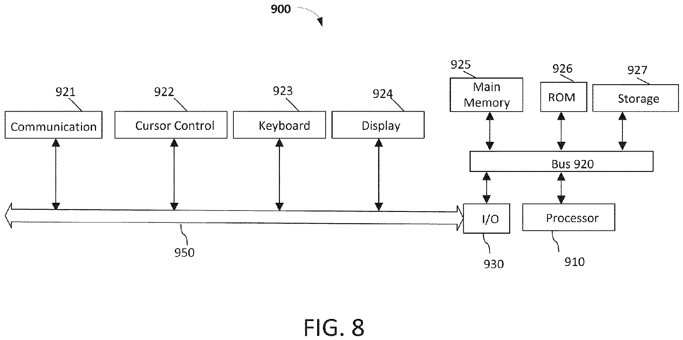

**Figure 8** illustrates a computer system 900 on which computing device 120 may be implemented. Computer system 900 includes a system bus 920 for communicating information, and a processor 910 coupled to bus 920 for processing information.

Computer system 900 further comprises a random-access memory (RAM) or other dynamic storage device 925 (referred to herein as main memory), coupled to bus 920 for storing information and instructions to be executed by processor 910. Main memory 925 also may be used for storing temporary variables or other intermediate information during execution of instructions by processor 910. Computer system 900 also may include a read only memory (ROM) and or other static storage device 926 coupled to bus 920 for storing static information and instructions used by processor 910.

A data storage device 927 such as a magnetic disk or optical disc and its corresponding drive may also be coupled to computer system 900 for storing information and instructions. Computer system 900 can also be coupled to a second I/O bus 950 via an I/O interface 930. A plurality of I/O devices may be coupled to I/O bus 950, including a display device 924, an input device (e.g., a keyboard (or alphanumeric input device) 923 and or a cursor control device 922). The communication device 921 is for accessing other computers (servers or clients). The communication device 921 may comprise a modem, a network interface card, or other well-known interface device, such as those used for coupling to Ethernet, token ring, or other types of networks.

Embodiments may be implemented as any or a combination of: one or more microchips or integrated circuits interconnected using a parent board, hardwired logic, software stored by a memory device and executed by a microprocessor, firmware, an application specific integrated circuit (ASIC), and/or a field programmable gate array (FPGA). The term "logic" may include, by way of example, software or hardware and/or combinations of software and hardware.

Embodiments may be provided, for example, as a computer program product which may include one or more machine-readable media having stored thereon machine-executable instructions that, when executed by one or more machines such as a computer, network of computers, or other electronic devices, may result in the one or more machines carrying out operations in accordance with embodiments described herein. A machine-readable medium may include, but is not limited to, floppy diskettes, optical disks, CD-ROMs (Compact Disc-Read Only Memories), and magneto-optical disks, ROMs, RAMs, EPROMs (Erasable Programmable Read Only Memories), EEPROMs (Electrically Erasable Programmable Read Only Memories), magnetic or optical cards, flash memory, or other type of media/machine-readable medium suitable for storing machine-executable instructions.

Moreover, embodiments may be downloaded as a computer program product, wherein the program may be transferred from a remote computer (e.g., a server) to a requesting computer (e.g., a client) by way of one or more data signals embodied in and/or modulated by a carrier wave or other propagation medium via a communication link (e.g., a modem and/or network connection).

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein. Moreover, the actions in any flow diagram need not be implemented in the order shown; nor do all of the acts necessarily need to be performed. Also, those acts that are not dependent on other acts may be performed in parallel with the other acts. The scope of embodiments is by no means limited by these specific examples. Numerous variations, whether explicitly given in the specification or not, such as differences in structure, dimension, and use of material, are possible. The scope of embodiments is at least as broad as given by the following claims.

## Claims

1. A system comprising:
at least one physical memory device to store a print workflow manager; and
one or more processors coupled with the at least one physical memory device to execute the print workflow manager to:
receive a print job;
receive a job ticket including first attributes;
convert the first attributes included in the job ticket to second attributes of a format supported by a printer;
determine whether a conflict exists between two or more of the second attributes; and
perform one or more adjustments to the two or more second attributes based on a priority list upon determining that the conflict exists.

2. The system of claim 1, wherein the adjustments are performed based on adjustment rules included in the priority list.

3. The system of claim 2, wherein an adjustment rule retains a highest priority attribute among the conflicting attributes and adjusts lower priority attributes to accommodate the highest priority attribute.

4. The system of claim 3, wherein the priority list further comprises one or more high-priority attributes and a list of low-priority attributes associated with each of the one or more high-priority attributes.

5. The system of claim 4, wherein performing an adjustment comprises iteratively changing the lower-priority attributes causing the conflict and determining whether the conflict has been resolved.

6. The system of claim 5, wherein the print workflow manager further to access the priority list upon determining that the conflict exists.

7. The system of claim 1, wherein the print workflow manager further to
receive constraints; and
generate the priority list based on the constraints.

8. The system of claim 1, wherein the print workflow manager to transmit the second attributes to the printer.

9. The system of claim 8, wherein the printer to receive the second attributes.

10. The system of claim 1, wherein the job ticket comprises a Job Definition Format (JDF) job ticket.

11. A computer-readable medium having stored thereon instructions that, when executed by one or more processors, cause the one or more processors to:
receive a print job;
receive a job ticket including first attributes;
convert the first attributes included in the job ticket to second attributes of a format supported by a printer;
determine whether a conflict exists between two or more of the second attributes; and
perform one or more adjustments to the two or more second attributes based on a priority list upon determining that the conflict exists.

12. The computer-readable medium of claim 11, wherein the adjustments are performed based on adjustment rules included in the priority list.

13. The computer-readable medium of claim 12, wherein performing an adjustment comprises iteratively changing lower-priority attributes causing the conflict and determining whether the conflict has been resolved.

14. The computer-readable medium of claim 11, having stored thereon instructions that, when executed by one or more processors, cause the one or more processors to access the priority list upon determining that the conflict exists.

15. The computer-readable medium of claim 11, having stored thereon instructions that, when executed by one or more processors, cause the one or more processors to:
receive constraints; and
generate the priority list based on the constraints.
